Europäisches Patentamt

European Patent Office

Office européen des brevets

(19)

(11) **EP 0 995 982 B1**

(12) **EUROPÄISCHE PATENTSCHRIFT**

(45) Veröffentlichungstag und Bekanntmachung des Hinweises auf die Patenterteilung:
**27.08.2003 Patentblatt 2003/35**

(51) Int Cl.⁷: **G01N 21/00**, G01P 5/00, G01N 15/02

(21) Anmeldenummer: **98901605.0**

(22) Anmeldetag: **09.01.1998**

(86) Internationale Anmeldenummer:
**PCT/RU98/00004**

(87) Internationale Veröffentlichungsnummer:
**WO 98/033370 (06.08.1998 Gazette 1998/31)**

(54) **VERFAHREN UND VORRICHTUNG ZUR AUFZEICHNUNG DER BEWEGUNG VON MIKROSKOPISCHEN OBJEKTEN**

METHOD AND DEVICE FOR RECORDING THE MOVEMENT OF MICROSCOPIC OBJECTS

PROCEDE ET DISPOSITIF PERMETTANT D'ENREGISTRER LE MOUVEMENT D'OBJETS MICROSCOPIQUES

(84) Benannte Vertragsstaaten:
**AT BE CH DE DK ES FI FR GB GR IE IT LI LU MC NL PT SE**

(30) Priorität: **16.01.1997 RU 97100196**

(43) Veröffentlichungstag der Anmeldung:
**26.04.2000 Patentblatt 2000/17**

(73) Patentinhaber:
 • **Rastopov, Stanislav Fedorovich**
  **Moscow, 117321 (RU)**
 • **Ageev, Vladimir Gennadievich**
  **Moscow, 103498 (RU)**
 • **Wilhelm, Michael**
  **83246 Unterwossen (DE)**

(72) Erfinder:
 • **RASTOPOV, Stanislav Fedorovich**
  **Moscow, 117321 (RU)**
 • **AGEEV, Vladimir Gennadievich**
  **Moscow, 103498 (RU)**

(74) Vertreter: **Voigt, Wolf-Rüdiger**
**Patentanwalt,**
**Alter Markt 1-2**
**06108 Halle (DE)**

(56) Entgegenhaltungen:
**EP-A- 0 307 029       EP-A- 0 396 257
DE-A- 2 423 136       SU-A- 122 213
SU-A- 648 142        US-A- 4 210 504
US-A- 4 302 087       US-A- 4 601 578
US-A- 5 502 561**

 • **AIZU Y ET AL: "BIO-SPECKLE PHENOMENA AND THEIR APPLICATION TO THE EVALUATION OF BLOOD FLOW" OPTICS AND LASER TECHNOLOGY,NL,ELSEVIER SCIENCE PUBLISHERS BV., AMSTERDAM, Bd. 23, Nr. 4, 1. August 1991 (1991-08-01), Seiten 205-219, XP000262901 ISSN: 0030-3992**

**Beschreibung**

Die Erfindung betrifft die Meßtechnik, insbesondere die Verfahren zur Aufzeichnung der Bewegung von Mikroobjekten, und kann beispielsweise in der Biologie zur Aufzeichnung der Bewegung von Brownschen Teilchen und Mikroorganismen sowie von Prozessen in biologischen Geweben, in der Kapillaroskopie u.a. zur Anwendung kommen.

Bekannt ist ein Verfahren zur Aufzeichnung der Bewegung von Mikroobjekten, das darin besteht, daß das Medium mit den Mikroobjekten durch Strahlung sondiert und die Dynamik der Streustrahlung, z.B. das Speckle-Bild einer kohärenten Strahlung, mit einem Fotosensor aufgezeichnet wird [1]. Die Vorrichtung zur Realisierung dieses Verfahrens besteht aus einer Lichtquelle, einem Sensor für die Streustrahlung und einer Einheit zur Verarbeitung des Ausgangssignals des Sensors.

Der Nachteil des Verfahrens besteht in diesem Fall darin, daß die Bewegung konkreter Mikroobjekte nicht verfolgt werden kann, da das Speckle-Bild keine Darstellung der einzelnen Mikroobjekte liefert.

Bekannt ist auch ein Verfahren, bei dem die Mikroobjekte unter dem Mikroskop beobachtet werden und ihre Bewegung in der reellen Bildebene des Objekts durch eine zyklische punktweise Abtastung dieses Bilds durch einen Fotosensor mit Aufzeichnung der Veränderung der Signalintensität in den jeweiligen Bildpunkten von Zyklus zu Zyklus aufgezeichnet wird ([2] - Prototyp).

Die Vorrichtung zur Realisierung dieses Prototyp-Verfahrens besteht aus einer Lichtquelle, einem Mikroskop, einem Fotosensor mit Abtasteinheit und einer Elektronikeinheit zur Signalverarbeitung.

Der Nachteil dieses Verfahrens ist seine geringe Empfindlichkeit gegenüber einer Veränderung der Objektparameter, da das Rauschen des Systems (akustisches Rauschen und Rauschen der Strahlung selbst von Zyklus zu Zyklus) die Signalveränderung infolge der Objektbewegung übertreffen kann. Außerdem ist die Frequenz der aufzuzeichnenden dynamischen Prozesse durch die Dauer des Meßzyklus nach oben begrenzt.

Ziel der Erfindung ist die Erhöhung der Empfindlichkeit der Messung der Bewegung von Mikroobjekten, die Ausweitung des Frequenzbereichs sowie die Vereinfachung des Verfahrens.

Dieses Ziel wird dadurch erreicht, daß die Intensität der Objektdarstellung im optischen Mikroskop durch voneinander unabhängige Fotosensoren gleichzeitig an mehreren Punkten gemessen wird. Die entsprechenden elektrischen Signale werden subtrahiert, und die Objektbewegung wird nach dem Amplituden-Frequenz-Spektrum dieses Differenzsignals beurteilt. Dabei wird praktisch nur die Objektbewegung gemessen, da die Fluktuation der Intensität der Sondierungsstrahlung selbst sowie das gleichphasige akustische Rauschen weitestgehend eliminiert werden und keinen Beitrag zum aufgezeichneten Differenzsignal leisten.

Dementsprechend unterscheidet sich die vorgeschlagene Vorrichtung zur Realisierung dieses Verfahrens dadurch vom Prototyp, daß sie zwei voneinander unabhängige Fotosensoren enthält, deren Ausgänge mit den verschiedenen Eingängen eines Differenzverstärkers verbunden sind.

In einer bevorzugten Ausführungsform sind die Fotosensoren in Form einer periodischen Struktur ausgeführt, deren benachbarte Elemente mit den verschiedenen Eingängen eines Differenzverstärkers verbunden sind.

Eine weitere bevorzugte Ausführungsform ist dadurch gekennzeichnet, daß auf dem Mikrometerobjektglas des Okulars des zweiten Mikroskopkanals Markierungen aufgebracht sind, die mit den Grenzen des Bildaufzeichnungsbereichs übereinstimmen.

Die vorgeschlagene Erfindung wird durch drei Abbildungen erläutert.

Abbildung 1 zeigt das Prinzipschaltbild der Vorrichtung mit folgenden Bezeichnungen: 1 - Lichtquelle, 2 - Mikroskop, 3 - Objektiv, 4 - Okular, 5 - Fotosensoren, 6 - Bildebene, 7 - Ebene des Mikrometerobjekts, 8 - Gegenstandsebene.

Abbildung 2 zeigt das Prinzipschaltbild der Entstehung des elektrischen Differenzsignals, dabei sind 9 - Mikroobjektbild in der Bildebene, 10 - Subtraktionsschaltung, 11 - Einheit zur Verarbeitung des Differenzsignals.

In Abbildung 3 ist das Beispiel einer periodischen Struktur mit den beiden Fotosensoren 12 und 13 dargestellt.

Das Verfahren wird folgendermaßen realisiert:

In der Gegenstandsebene des Mikroskops wird das Objekt von einer kohärenten oder einer inkohärenten Lichtquelle bestrahlt, und die Objektintensität in der Bildebene wird gleichzeitig in mehreren Punkten aufgezeichnet, beispielsweise mit einer Quadrantenfotodiode. Dabei werden die elektrischen Signale von den voneinander unabhängigen lichtempfindlichen Flächen der Fotodiode subtrahiert. Dabei wird auch das gesamte gleichphasige Rauschen, beispielsweise die Fluktuationen der Intensität der Lichtquelle, eliminiert. Demgegenüber sind die Signale infolge der Bewegung der Mikroobjekte oder der Veränderung ihrer Form unabhängig, und die Fluktuationen der Intensität des Fotodiodensignals sind nicht korrelativ und werden nicht subtrahiert. Mehr noch, bekanntlich ist die Summe (bzw. Differenz) zweier (amplituden)gleicher Signale mit zufälliger Phase um das $(\sqrt{2})$-fache größer als die Einzelsignale. Folglich liefert die Superposition von N unabhängigen Signalen der Fotodioden eine Erhöhung der Nutzsignalamplitude um das $(\sqrt{N})$-fache. Es muß jedoch unterstrichen werden, daß der Hauptbeitrag zur Verbesserung des Signal-Rausch-Verhältnisses durch die Subtraktion des gleichphasigen Rauschens geliefert wird. Die Dynamik der Mikroobjekte wird aus dem Fourier-Spektrum (oder aus der Korrelationsfunktion) des elektrischen Differenzsignals ausgewertet.

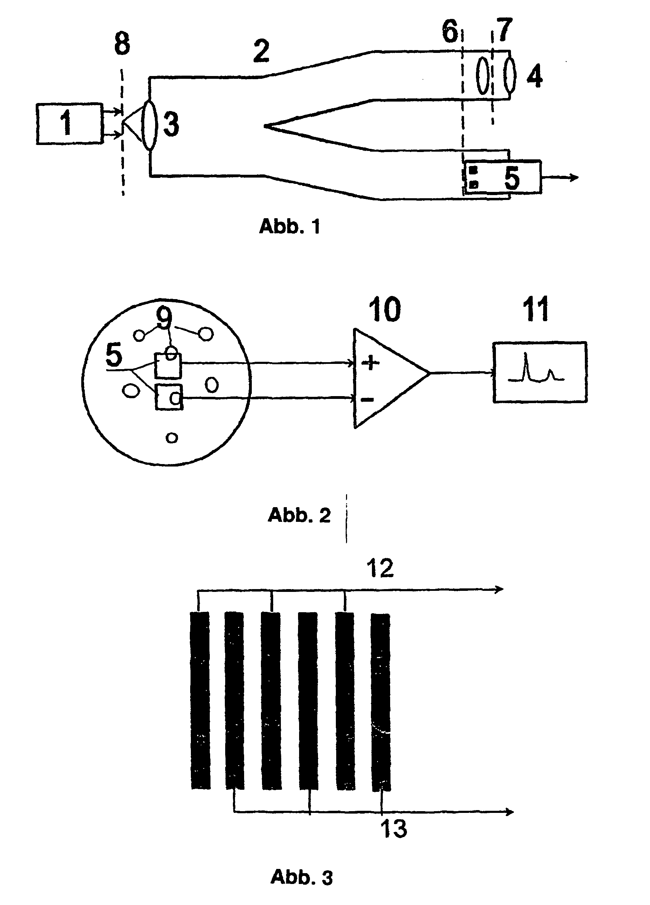

Die Vorrichtung zur Realisierung des Verfahrens ist in Abbildung 1 schematisch dargestellt und besteht aus der Lichtquelle 1, dem Zweikanalmikroskop 2 mit Objektiv 3 und Okular 4, in dessen zweitem Kanal die Einheit der Fotosensoren angeordnet ist, deren lichtempfindliche Flächen in der Bildebene 6 liegen. Zur besseren Beobachtung des Aufzeichnungsbereichs sind auf dem in der Ebene 7 angeordneten Mikrometerobjektglas Linien aufgetragen, die mit den Grenzen der von den Fotosensoren 5 aufzuzeichnenden Gebiete des in der Gegenstandsebene 8 angeordneten Objekts übereinstimmen. Abbildung 2 zeigt die lichtempfindlichen Flächen der Fotosensoren 5 vor dem Bildhintergrund, beispielsweise der Mikroobjekte 9 (bzw., was dasselbe ist, der Projektion der Fotodioden 5 auf die Gegenstandsebene 8, wie sie bei Beobachtung durch das Okular 4 zu sehen sind). Schematisch ist ebenso die Verbindung der Fotodiodenausgänge mit der Subtraktionsschaltung 10 (Differenzverstärker) und der Auswerteeinheit 11 für das Differenzsignal dargestellt. Abbildung 3 zeigt ein Beispiel für die Realisierung der periodischen Struktur der lichtempfindlichen Flächen der Fotosensoren, wodurch eine umfassendere Subtraktion des gleichphasigen Rauschens und eine Verschiebung des aufzuzeichnenden Nutzsignalspektrums in den hochfrequenten Bereich ermöglicht wird. Die lichtempfindlichen Bereiche (geschwärzt) sind jeweils mit dem übernächsten elektrisch verbunden und bilden die beiden Fotosensoren 12 und 13.

Nachstehend wird die Funktionsweise der Vorrichtung am Beispiel der Aufzeichnung der Bewegung der Mikroteilchen 9 im Wasser erläutert. Bei Brownscher oder gerichteter Bewegung überschreiten die Bilder der Mikroteilchen die Grenzen der lichtempfindlichen Flächen 5 und die von ihnen registrierte Intensität ändert sich, und zwar unabhängig voneinander auf jeder der Flächen. Ihr elektrisches Signal wird durch den Differenzverstärker subtrahiert, dabei wird der gleichphasige Teil des Signals durch diesen Verstärker unterdrückt, und an die Auswerteeinheit 11 gelangt nur das nichtgleichphasige Differenzsignal, das durch die Dynamik der Teilchen bedingt ist. In der Auswerteeinheit wird beispielsweise das Fourier-Spektrum des Differenzsignals berechnet, dessen Kennfrequenz F (z.B. die Halbwertsbreite des Lorenz-Spektrums für die Brownsche Bewegung) eine Funktion der Zeit t für die Überschreitung des Kennmaßes d der Fläche 5 durch die Teilchenbilder ist:

$$F = 1/t = vK/d \qquad (1)$$

Dabei sind v - Bewegungsgeschwindigkeit der Teilchen, K - Vergrößerung des Objektivs. So entspricht bei einer Größe der Flächen von 1 mm und einer Vergrößerung des Objektivs 3 von 100 x der Geschwindigkeit v = 10 µm/s eine Frequenz von F = 1 Hz.

Für die Aufzeichnung derartiger Frequenzen ist eine vergleichsweise lange Meßzeit notwendig. Zur Erhöhung der Kennfrequenz F, die der jeweiligen Geschwindigkeit v entspricht, sowie zur vollständigeren Unterdrückung des gleichphasigen Rauschens sind die lichtempfindlichen Flächen als periodische Struktur ausgeführt, deren benachbarte Elemente zu verschiedenen Fotosensoren gehören. Eine mögliche Variante einer solchen Struktur zeigt Abbildung 3, bei der die Fotosensoren 12 und 13 von mehreren Elementen gebildet werden, die jeweils mit dem übernächsten verbunden sind. Dadurch wird eine größere Gleichmäßigkeit der Beleuchtungsbedingungen der Fotosensoren erreicht und das Kennmaß d verringert, das nunmehr gleich der Periode der Struktur ist, bei gleicher Gesamtfläche der Fotosensoren.

Bei einer Gesamtfläche der Fotosensoren von 1 mm$^2$ und k = 100 beträgt das Kennmaß des Objektaufzeichnungsgebiets 10 µm. Die Umrisse des Aufzeichnungsgebiets sind im Gesichtsfeld des Mikroskops dank der Linien sichtbar, die auf dem in der Ebene 7 angeordneten Mikrometerobjektglas aufgebracht wurden.

Das vorgeschlagene Verfahren und die vorgeschlagene Vorrichtung wurden unter Verwendung eines handelsüblichen Mikroskops mit einer Vergrößerung von 1200 x realisiert. Es wurde nachgewiesen, daß die Anwendung dieses Verfahrens zu einer Erhöhung des Signal-Rausch-Verhältnisses um 20-40 dB in Abhängigkeit von der Art der Lichtquelle gegenüber einer seriellen Aufzeichnung der Signale der Fotosensoren führt (es wurden handelsübliche Quadrantendioden FD-19-KK eingesetzt). Mit Hilfe eines IBM-Computers wurde das Fourier-Spektrum des Differenzsignals gemessen und nachgewiesen, daß die Breite des aufzuzeichnenden Spektrums mit der Zunahme der Bewegungsgeschwindigkeit der Mikroobjekte v und der Verringerung des Kennmaßes d in Übereinstimmung mit Formel (1) zunimmt. Bei Schwingungsbewegungen des Objekts wird die Schwingungsfrequenz direkt aus dem Peak des Fourier-Spektrums berechnet und hängt nicht von der Vergrößerung des Mikroskops ab, wenn die Amplitude der Schwingungen kleiner als das Kennmaß d ist.

Literatur

1. "Bio-speckle phenomena and their application to the evaluation of blood flow" Y. Aizu, T. Asakura// Optics and Laser Technology, Vol. 23, No. 4, 1991, pp. 205-219

2. V.I. Kozlov i dr. Histophysiologie der Kapillaren. Sankt Petersburg, "Nauka", 1994, pp. 207-210.

## Patentansprüche

1. Verfahren zur Aufzeichnung der Bewegung von mikroskopischen Objekten durch Erzeugen eines reellen Objektbilds in einem Mikroskop und Aufzeichnung der Dynamik der Intensität in verschiedenen Bildpunkten, **dadurch gekennzeichnet, daß** die Intensität gleichzeitig in zwei oder mehreren Bildpunkten durch voneinander unabhängige Fotosensoren gemessen wird, deren elektrische Ausgangssignale voneinander subtrahiert werden, und daß die Objektbewegung aus dem Amplituden-Frequenz-Spektrum des resultierenden Differenzsignals ausgewertet wird.

2. Vorrichtung zur Aufzeichnung der Bewegung von mikroskopischen Objekten, die ein Mikroskop (2), beispielsweise ein Zweikanalmikroskop, eine Lichtquelle (1), einen in einem ersten Kanal des Mikroskops angeordneten Fotosensor (5) und eine elektronischen Auswerteeinheit (11) für dessen elektrisches Ausgangssignal umfaßt, **dadurch gekennzeichnet, daß** der Fotosensor mindestens zwei voneinander unabhängige Fotoelemente enthält, deren Ausgänge mit verschiedenen Eingängen eines Differenzverstärkers (10) verbunden sind.

3. Vorrichtung nach Anspruch 2, **dadurch gekennzeichnet, daß** die Fotoelemente (12,13) in Form einer periodischen Struktur ausgeführt sind, deren benachbarte Elemente mit verschiedenen Eingängen des Differenzverstärkers verbunden sind.

4. Vorrichtung nach Anspruch 2, **dadurch gekennzeichnet, daß** auf einem Mikrometerobjektglas eines Okulars (4) eines zweiten Mikroskopkanals Markierungen aufgebracht sind, die mit den Grenzen des aufzuzeichnenden Bildes übereinstimmen.

## Claims

1. A method for recording the movement of microobjects by obtaining the real object image in a microscope and for recording the dynamics of the intensity in different image points, **characterized in that** the intensity is measured simultaneously in two or more image points by means of independent photosensors the electrical signals of which are subtracted from one another and **in that** the object's dynamics is determined on the basis of the amplitude frequency spectrum of the differential signal.

2. A device for recording the movement of microobjects, which device comprises a microscope, e.g. a dual-channel microscope, which contains a light source, a photosensor arranged in one of the microscope's channels and an electronic analysis unit for analyzing the electrical output signal of the aforesaid photosensor, **characterized in that** the photosensor contains at least two independent photoelements the outputs of which are connected to different inputs of a differential amplifier.

3. A device according to Claim 2, **characterized in that** the photoelements are arranged in the form of a periodic structure the adjacent elements of which are connected to different inputs of the differential amplifier.

4. A device according to Claim 2, **characterized in that** markings are provided on the micrometer object glass of the eyepiece of the microscope's second channel, which markings correspond to the boundaries of the recorded image.

## Revendications

1. Procédé pour l'enregistrement du mouvement de microobjets par réception de l'image réelle de l'objet au microscope ainsi que pour l'enregistrement du comportement dynamique de l'intensité dans différents points de l'image, **caractérisé par le fait que** l'intensité est mesurée simultanément dans deux ou plusieurs points de l'image par des photocapteurs indépendants l'un de l'autre, dont les signaux électriques seront soustraits et que le comportement dynamique de l'objet sera évalué d'après le spectre d'amplitude et de fréquence de ce signal différentiel.

2. Dispositif pour l'enregistrement du mouvement de microobjets que représente un microscope, par exemple un microscope à deux canaux, qui contient une source lumineuse, un photocapteur disposé dans un des canaux du microscope ainsi qu'une unité électronique d'évaluation pour son signal électrique de départ, **caractérisé par le fait que** le photocapteur contient au moins deux cellules photoélectriques indépendantes l'une de l'autre, dont les sorties sont reliées avec différentes entrées d'un amplificateur différenciateur.

3. Dispositif selon la revendication 2, **caractérisé par le fait que** les cellules photoélectriques sont exécutées sous forme d'une structure périodique, dont les cellules avoisinantes sont reliées avec différentes entrées de l'amplificateur différenciateur.

4. Dispositif selon la revendication 2, **caractérisé par le fait que** sur le verre d'objet micrométrique de l'oculaire du deuxième canal du microscope figurent des marques qui correspondent aux limites de l'image à enregistrer.

**Abb. 1**

**Abb. 2**

**Abb. 3**